# EUROPÄISCHE PATENTSCHRIFT

(11) **EP 1 474 490 B1**
(45) Veröffentlichungstag und Bekanntmachung des Hinweises auf die Patenterteilung: **08.06.2005**
(21) Anmeldenummer: 03737315.6
(22) Anmeldetag: 05.02.2003
(51) Int. Cl.: C09D 167/08

(54) **CYCLOPENTADIEN-ADDUKTE ENTHALTENDE ZUSAMMENSETZUNGEN UND IHRE VERWENDUNG FUR CHEMIKALIENBESTÄNDIGE BESCHICHTUNGEN**
COMPOSITIONS CONTAINING CYCLOPENTADIENE ADDUCTS AND THE USE THEREOF FOR CHEMICALLY STABLE COATINGS
COMPOSITIONS CONTENANT DES PRODUITS D'ADDITION CYCLOPENTADIENE ET LEUR UTILISATION DANS DES REVETEMENTS A RESISTANCE CHIMIQUE

(30) Priorität: 07.02.2002 DE 10205065
(43) Veröffentlichungstag der Anmeldung: 10.11.2004
(73) Patentinhaber: Ashland-Südchemie-Kernfest GmbH, 40721 Hilden (DE)
(72) Erfinder: KUHLMANN, Peter, 42489 Wülfrath (DE); KRAUSE, Siegfried, 48165 Münster (DE); LERSCHMACHER, Andreas, 40489 Düsseldorf (DE); WINTER, Reinhard, 42489 Wülfrath (DE)
(74) Vertreter: VOSSIUS & PARTNER
(86) Internationale Anmeldenummer: PCT/EP2003/001137
(87) Internationale Veröffentlichungsnummer: WO 2003/066762

(56) Entgegenhaltungen:
- US-A- 3 291 858
- US-A- 3 387 059
- US-A- 3 519 583

## Beschreibung

Die Erfindung betrifft Zusammensetzungen enthaltend mindestens ein Cyclopentadien-Addukt und mindestens eine weitere Komponente ausgewählt aus Phenolharzen, Aminoharzen, polyfunktionellen Isocyanaten und Derivaten davon, sowie Beschichtungszusammensetzungen, die diese Zusammensetzungen als Bindemittel enthalten. Die daraus resultierenden Beschichtungen sind sehr beständig gegenüber Chemikalien; die Beschichtungszusammensetzungen eignen sich daher als epoxid-freie Emballagenlacke.
Die Erfindung betrifft weiterhin beschichtete Gegenstände, insbesondere Behältnisse, deren Beschichtung, durch Aufbringen der erfindungsgemäßen Beschichtungszusammensetzung erhältlich ist.

Beschichtungen mit hoher Chemikalienbeständigkeit sind von großem Interesse, u.a. für die Beschichtung von Verpackungsmaterialien, die mit aggressiven Medien in Kontakt kommen. Sogenannte Emballagenlacke sind Lacke für Verpackungen aus Kunststoff, Aluminium und Blech, die diesen Behältnissen dekorative Eigenschaften und Schutz vor dem Füllgut verleihen; sie werden z. B. für die Innenlackierung von Behältnissen aus Weiß- oder Schwarzblech, verchromtem Stahlblech (TFS= tin free steel) und Aluminiumblech verwendet. Bei den Behältnissen kann es sich z.B. um Konservendosen, Getränkedosen, Arzneimittelverpackungen (wie z.B. Tuben), Aerosoldosen, Tonnen und Fässer handeln. Die Innenlackierung muß hoch chemikalienbeständig sein (da in Kontakt mit dem Füllgut), je nach Typ der Verpackung gegebenenfalls beständig gegenüber Sterilisation, und daneben für die Herstellung und das Verschließen der Behältnisse hohe Elastizität (Dehn- und Bördelfähigkeit) aufweisen. Häufig zum Einsatz kommen Lacke auf Epoxid-/Phenol-Basis, die aufgrund ihrer Eigenvergilbung beim Einbrennen auch als "Goldlacke" bezeichnet werden, sowie pigmentierte Weißlacke auf Epoxid-Melaminharz oder Polyester-Melaminharz-Basis.

Der Grund für die Verbreitung von Lacken auf Epoxid-Phenol-Basis sind die überragenden Eigenschaften dieser Beschichtungen im Hinblick auf Verarbeitbarkeit (Lackierbarkeit, Verformbarkeit), die sehr guten sensorischen Eigenschaften (geschmacks- und geruchsneutral) und eben die Beständigkeit gegenüber aggressiven Medien.

Von großem Nachteil ist es jedoch, dass niedrigmolekulare Bestandteile eines z.B. auf Bisphenol-A basierenden Epoxidharzes endokrin sind und aus der Beschichtung in das Füllgut migrieren können; sie können somit in den menschlichen Körper gelangen, wenn es sich bei dem Füllgut um Nahrungsmittel handelt.

Die Wirkung endokrin wirksamer Substanzen wurde z.B. an Fischen - besonders im Abstrom von Kläranlagen, wo höhere Konzentrationen an endokrin wirksamen Substanzen vorliegen - nachgewiesen. Eine theoretische Beeinträchtigung der menschlichen Fortpflanzungsfähigkeit wird diskutiert.

Ein Ersatz dieser Harze - unter Beibehalt der positiven Eigenschaften - durch weniger bedenkliche wäre somit erstrebenswert.

Polyesterharze finden ebenso wie Acrylate in Kombination mit Melaminharzen vorzugsweise in Lacken für Behälteraußenbeschichtungen Verwendung, da sie im allgemeinen eine ungenügende Chemikalien-Beständigkeit aufweisen.
Die wenigen Systeme auf Basis von Polyester-Phenolharz, die für einen Einsatz als Innenbeschichtung geeignet angesehen werden können und am Markt verfügbar sind, beinhalten meistens Polyester mit sehr hohem Molekulargewicht, und weisen somit typischerweise bei einer Viskosität von 2000 bis 7000 mPa·s bei 25°C nach DIN 53015 einen eher niedrigen Feststoffgehalt von 40 bis 60% nach DIN 55671 auf, woraus letzten Endes ein hoher Preis und hoher VOC-Gehalt resultiert, ohne dass sie letztlich den branchenüblichen Anforderungen hinsichtlich der Beständigkeitseigenschaften gänzlich entsprechen.

In der Praxis wird gefordert, daß Beschichtungen von Behältnissen, insbesondere Innenbeschichtungen von Behältnissen für Lebensmittel, gute Haftung z.B. auf dem verwendeten Blech, eine hohe Beständigkeit gegenüber Chemikalien und Sterilisation, keinen Einfluss auf Geschmack, Geruch oder Erscheinungsbild der Inhalte haben, sowie geeignete mechanische Eigenschaften in Hinblick auf Flexibilität und Härte aufweisen.

Lebensmittelverpackungen sollen außerdem den Vorgaben der Food and Drug Adminstration (FDA) und des US Department of Agriculture (USDA) genügen, bzw. den entsprechenden Vorschriften in anderen Staaten (z.B. BGA, VGB, Synoptic Document des wissenschaftlichen Lebensmittelausschuß (SFC) der EU-Kommission, Resolution AP (96)5 des Europarats).

Aufgabe der vorliegenden Erfindung ist es daher, Zusammensetzungen zur Verfügung zu stellen, die epoxid-frei sind und zu Beschichtungen führen, die ausgezeichnete mechanische Eigenschaften und Chemikalienbeständigkeit aufweisen und außerdem keine endokrin wirksamen Bestandteile enthalten.

Weitere Aufgaben der vorliegenden Erfindung sind die Bereitstellung von Beschichtungszusammensetzungen sowie von beschichteten Gegenständen, insbesondere Behältnissen, die zur Lebensmittelverpackung geeignet sind, wobei die Beschichtungszusammensetzungen einen gewissen Spielraum bezüglich der Trocknungsparameter offen lassen, eine ausreichende Lagerstabilität zeigen und durch herkömmliche Auftragungsvorrichtungen applizierbar sind.

Die Aufgaben der Erfindung werden gelöst durch eine Zusammensetzung, umfassend
(a) mindestens eine Komponente ausgewählt aus Phenolharzen, Aminoharzen, polyfunktionellen Isocyanaten und Derivaten davon, und
(b) mindestens ein Cyclopentadien-Addukt als weitere Komponente, erhältlich durch Umsetzung mindestens eines ungesättigten Esterprodukts mit einem gegebenenfalls substituierten Cyclopentadien,
wobei das ungesättigte Esterprodukt erhältlich ist durch Umsetzung einer Alkoholkomponente umfassend einen ein- oder mehrwertigen Alkohol mit einer Carbonsäurekomponente umfassend eine ein- oder mehrwertige Carbonsäure oder ein Derivat davon,
mit der Maßgabe, daß der ein- oder mehrwertige Alkohol und/oder die ein- oder mehrwertige Carbonsäure mindestens eine nicht-aromatische Doppelbindung aufweisen und
mit der Maßgabe, daß entweder der ein- oder mehrwertige Alkohol oder die einoder mehrwertige Carbonsäure oder beide mehrwertig sind,
wobei die Komponente (b) funktionelle Gruppen (B) aufweist, die mit den funktionellen Gruppen (A) der Komponente (a) eine chemische Bindung eingehen können
bzw. eine Beschichtungszusammensetzung, umfassend
(a) vorstehende Zusammensetzung
(b) mindestens ein Lösungsmittel
   und
(c) gegebenenfalls mindestens einen weiteren Inhaltsstoff ausgewählt aus Füllstoffen, Farbstoffen, Pigmenten und Additiven, wie Fungiziden, Bakteriziden, Trockenstoffen, Hautverhinderungsmittel, Härtungsbeschleuniger, Verlaufmittel, Emulgatoren, Benetzungsmittel, Ausschwimmverhütungsmittel, Antiabsetzmittel und Mattierungsmittel.

Die einzelnen Komponenten der erfindungsgemäßen Cyclopentadien-Addukt enthaltenden Zusammensetzungen und der erfindungsgemäßen Beschichtungszusammensetzungen werden im folgenden näher ausgeführt.

Im folgenden wird der Ausdruck "Beschichtungszusammensetzung" im Sinne des auf dem Fachgebiet bekannten Ausdrucks "Beschichtungsstoff" verwendet; der Beschichtungsstoff (Beschichtungszusammensetzung) liefert durch Auftragen, Trocknen und gegebenenfalls Einbrennen die Beschichtung eines Gegenstands.

Die mit Cyclopentadien modifizierten Esterprodukte werden im folgenden auch als Cyclopentadien-Addukte bezeichnet.

Soweit nicht anders angegeben, gelten im vorliegenden Text folgende Definitionen:

Ein Alkylrest umfaßt geradkettige und verzweigte gesättigte Kohlenwasserstoffreste mit vorzugsweise 1 bis 20 Kohlenstoffatomen, besonders bevorzugt 1 bis 12 Kohlenstoffatomen; gegebenenfalls können ein oder mehrere Substituenten (vorzugsweise ein bis drei) vorhanden sein, die unabhängig ausgewählt werden aus Halogenatomen, OH, SH und NH₂.
Halogenatome sind Fluor-, Chlor-, Brom- und lodatome.

Unter aromatischem Kohlenwasserstoffrest oder Arylrest wird im folgenden vorzugsweise eine aromatische Struktureinheit mit 6 bis 20 Kohlenstoffatomen verstanden (besonders bevorzugt 6 bis 12 Kohlenstoffatome), die gegebenenfalls ein oder mehrere Substituenten (vorzugsweise 1 - 3) aufweist, die ausgewählt sind aus OH, SH, NH₂, Halogenatomen und C₁-C₁₂-Alkylresten. Beispiele sind gegebenenfalls substituierte Phenyl- und Naphthylgruppen.

Unter aliphatischem Kohlenwasserstoffrest wird ein gesättigter oder ungesättigter Kohlenwasserstoffrest verstanden, der geradkettig oder verzweigt sein kann und vorzugsweise 1 bis 30 Kohlenstoffatome (besonders bevorzugt 1 bis 20 Kohlenstoffatome) aufweist. Der aliphatische Kohlenwasserstoffrest kann gegebenenfalls mit ein oder mehreren Substituenten substituiert sein (vorzugsweise 1-3), die unabhängig ausgewählt sind aus OH, SH, NH₂ und Halogenatomen.

Unter cycloaliphatischem Kohlenwasserstoffrest wird ein gesättigter oder ungesättigter (nicht aromatischer) Kohlenwasserstoffrest verstanden, der vorzugsweise 3 bis 8 Kohlenstoffatome (besonders bevorzugt 5-6 Kohlenstoffatome) aufweist. Der cycloaliphatische Kohlenwasserstoffrest kann gegebenenfalls mit ein oder mehreren Substituenten substituiert sein (vorzugsweise 1-3), die unabhängig ausgewählt sind aus OH, SH, NH₂ und Halogenatomen und C₁ - C₁₂ Alkylresten.

Unter Säurederivaten wird im folgenden Säureanhydrid, Säureamid, Säurehalogenide und Ester z. B. mit aliphatischen oder cycloaliphatischen Alkoholen oder C₇-C₂₀-Aralkyl-OH verstanden, wobei es sich bei Estern vorzugsweise um C₁-C₁₈-Alkylester besonders bevorzugt C₁-C₆-Alkylester handelt.

Als ersten essentiellen Bestandteil (Komponente (a)) enthalten die erfindungsgemäßen Zusammensetzungen mindestens eine Komponente ausgewählt aus Phenolharzen, Aminoharzen, polyfunktionellen Isocyanaten und Derivaten davon, die funktionelle Gruppen (A) aufweist.

Als Komponente (a) der erfindungsgemäßen Zusammensetzungen können alle durch Kondensation von Phenolen mit Carbonylverbindungen (z.B. Aldehyde wie Formaldehyd), durch Derivatisierung der dabei resultierenden Kondensate oder durch Addition von Phenolen an ungesättigte Verbindungen wie z.B. Acetyle, Terpene, oder natürliche Harze gewonnene Phenolharze verwendet werden. Bevorzugte Beispiele sind Phenol-, Butylphenol-, Nonylphenol-, Kresol-, Xylenol-, Bisphenol-A-Harze und ihre Derivate; besonders bevorzugt sind Resole. Bei Bedarf sind diese zwecks Erhöhung der Verträglichkeit mit dem Cyclopentadien-Addukt in der dem Fachmann bekannten Weise zu modifizieren; mögliche Modifizierungen sind z.B. Veretherungen (insbesondere Butylierung). Eine Veretherung der Phenolharze unter Einführung hydrophober Gruppierungen wie z.B. Butylgruppen ist ein bevorzugter Hydrophobierungsweg.
Typische, handelsübliche Harze, die nach Auswahl geeigneter Lösungsmittel, die der unterschiedlichen Polarität der beiden Komponenten der erfindungsgemäßen Zusammensetzung Rechnung tragen, Einsatz finden können sind z.B. Uravar FB 209 BT-57 (DSM Resins B.V.), Askofen R 9500 (Ashland-Südchemie-Kernfest GmbH), und GPRI 7550 (Georgia Pacific Resins, Inc.).

Neben Phenolharzen können als Komponente (a) auch Aminoharze eingesetzt werden, also Polykondensationsprodukte aus Carbonylverbindungen (insbesondere Formaldehyd, aber auch höhere Aldehyde und Ketone) und NH-Gruppen enthaltenden Verbindungen (z.B. Hamstoff, Melamin, Urethan, Cyan- und Dicyanamid, aromatische Amine und Sulfonamide). Bevorzugte Aminoharze sind Melamin-, Benzoguanaminharze und ihre Derivate, wie z. B. veretherte Harze (insbesondere butylierte Harze), die den großen Vorteil einer guten Verträglichkeit mit anderen Bestandteilen von Beschichtungszusammensetzungen im allgemeinen und im besonderen den als Komponente (b) verwendeten Cyclopentadien-Addukten aufweisen.
Handelsübliche Harze, die erfindungsgemäß in Kombination mit den Cyclopentadien-Addukten Einsatz finden können, sind z.B. Cymel 303 (Cytec Netherlands (CRP) B.V.) und Cymel 5011 (Cytec Netherlands (CRP) B.V.).

Neben Phenolharzen und Aminoharzen können als Komponente (a) auch polyfunktionelle Isocyanate verwendet werden, welche im folgenden auch als Polyisocyanate bezeichnet werden. Als Polyisocyanate finden aliphatische, cycloaliphatische, aromatische und heterocyclische Isocyanate mit mindestens zwei Isocyanatgruppen in einem Molekül Verwendung. Außer Monomeren können auch Oligomere oder Prepolymere verwendet werden. Beispiele dafür sind: Toluol-2,4-diisocyanat, Toluol-2,6-diisocyanat, 3-Phenyl-2-ethylendiisocyanat, 1,5-Naphthalindiisocyanat, Cumol-2,4-diisocyanat, 4-Methoxy-1,3-diphenyldiisocyanat, 4-Chlor-1,3-phenyldiisocyanat, Diphenylmethan-4,4'-diisocyanat, Diphenylmethan-2,4'-diisocyanat, Diphenylmethan-2,2'-diisocyanat, 4-Brom-1,3-phenyldiisocyanat, 4-Ethoxy-1,3-phenyldiisocyanat, 2,4'-Diisocyanatdiphenylether, 5,6-Dimethyl-1,3-phenyldiisocyanat, 2,4-Dimethyl-1,3-phenyldiisocyanat, 4,4-Diisocyanatodiphenyl-ether, 4,6-Dimethyl-1,3-phenyldiisocyanat, 9,10-Anthracendiisocyanat, 2,4,6-Toluol-triisocyanat, 2,4,4'-Triisocyanatodiphenlether, 1,4-Tetramethylendiisocyanat, 1,6-Hexamethylendiisocyanat, 1,10-Decamethylendiisocyanat, 1,3-Cyclohexylendiiso-cyanat, 4,4'-Methylen-bis(cyclohexylisocyanat), Xyloldiisocyanat, 1-Isocyanato-3-methylisocyanato-3,5,5-trimethylcyclohexan (Isophorondiisocyanat), 1,3-Bis(iso-cyanato-1-methylethyl)benzol (m-TMXDI), 1,4-Bis(isocyanato-1-methylethyl)benzol (p-TMXDI).

Es können auch blockierte Polyisocyanate verwendet werden wie z.B. die kommerziell erhältlichen Uradur YB147 S1 (DSM Resins B.V.) und DESMODUR BL 3175 (BAYER AG).

Als weiteren essentiellen Bestandteil enthalten die erfindungsgemäßen Zusammensetzungen mindestens ein Cyclopentadien-Addukt, das durch Umsetzung mindestens eines ungesättigten Esterprodukts mit einem gegebenenfalls substituierten Cyclopentadien erhältlich ist. Das dabei eingesetzte ungesättigte Esterprodukt ist wiederum erhältlich durch Umsetzung einer Alkoholkomponente umfassend einen ein- oder mehrwertigen Alkohol mit einer Carbonsäurekomponente umfassend eine ein- oder mehrwertige Carbonsäure. Bei dieser Umsetzung ist entscheidend, dass der ein- oder mehrwertige Alkohol und/oder die ein- oder mehrwertige Carbonsäure mindestens eine nicht-aromatische Doppelbindung aufweisen. Außerdem muß entweder der ein- oder mehrwertige Alkohol oder die ein- oder mehrwertige Carbonsäure oder beide mehrwertig sein.

Das erhaltene Cyclopentadien-Addukt muß funktionelle Gruppen (B) aufweisen, die mit den funktionellen Gruppen (A) des vorstehend beschriebenen anderen essentiellen Bestandteils (Komponente (a)) eine chemische Bindung eingehen können.

Die Cyclopentadien-Addukte sind bei erhöhten Temperaturen (z.B. einer Temperatur von 200 bis 300°C, bevorzugter 240 und 280°C, besonders bevorzugt 250-280°C) in einem geschlossenen System unter Druck (z.B. einem Überdruck von 0,2 bis 15 bar, bevorzugter einem Überdruck von 1-10 bar und besonders bevorzugt einem Überdruck von 3 bis 8 bar) durch Umsetzung mindestens eines ungesättigten Esterprodukts mit Cyclopentadien erhältlich, wobei ein inertes Lösungsmittel verwendet werden kann. Bei der Reaktion wird üblicherweise Dicyclopentadien (gegebenenfalls substituiert) eingesetzt, das aber bei einer Temperatur von 170-180°C zu Cyclopentadien zerfällt. Das Cyclopentadien bzw. Dicyclopentadien kann gegebenenfalls ein oder mehrere Substituenten unabhängig ausgewählt aus Halogenen (Fluor, Chlor, Brom und lod) und C₁-C₆-Alkylresten aufweisen. Diese - im Vergleich mit den eingangs erwähnten Polyestern - eher niedrig-viskosen Cyclopentadien-Addukte, die bei einer Viskosität von etwa 500 bis 3500 mPa·s (bei 25°C nach DIN 53015 gemessen) einen nach DIN 55671 bestimmten Feststoffgehalt z. B. in Testbenzin von mehr als 70% aufweisen, weisen sehr gute chemische Beständigkeiten aufgrund erschwerter Hydrolyse auf.

Über die Anzahl der funktionellen Gruppen (B) der Cyclopentadien-Addukte, das heißt letztlich über die Variation von Kennzahlen wie z.B. der Hydroxylzahl oder der Säurezahl, wird die Reaktivität des Cyclopentadien-Addukts gesteuert.
Als funktionelle Gruppen kommen neben der Hydroxylgruppe grundsätzlich alle nucleophilen Gruppen in Frage, die durch Reaktion mit den Methylolgruppen von Phenolharzen, Aminogruppen von Aminoharzen wie z.B. Melaminharzen oder Benzoguanaminharzen bzw. den Isocyanatgruppen von polyfunktionellen Isocyanaten eine chemische Vernetzung bedingen können, so z.B. auch die Aminooder Thiol-Gruppe.
Ein gewünschter Nebeneffekt der vorhandenen funktionellen Gruppen (B) beim Cyclopentadien-Addukt ist die Reduzierung der Hydrophobie, was insbesondere bei Verwendung von Phenolharzen als zweiten Bestandteil erforderlich ist, da ansonsten Unverträglichkeiten in der Zusammensetzung und/oder der Beschichtung selbst resultieren können.

Für die Erfindung besonders geeignete Cyclopentadien-Addukte sind z.B. solche, die bezogen auf gesamtes Addukt im allgemeinen 5 bis 60 Gew%, vorzugsweise 20 bis 50 Gew% und besonders bevorzugt 35 bis 50 Gew% Cyclopentadien enthalten. Gemäß einer bevorzugten Ausführungsform beträgt der Hydroxylgehalt der Cyclopentadien-Addukte vorzugsweise 0,1 Gew% bis 20 Gew% OH bezogen auf Cyclopentadien-Addukt, besonders bevorzugt 0,5 bis 10%, insbesondere bevorzugt 1 bis 8%.

Die Cyclopentadien-Addukte sind naturgemäß vorteilhafterweise in unpolaren Lösemitteln löslich, halten sich jedoch infolge der vorhandenen funktionellen Gruppen, die z.B. durch Kennzahlen wie Hydroxylzahl oder Säurezahl quantifiziert werden können, in gewissem Maße auch in polarerem Medium in Lösung.

Für die Herstellung des Esterprodukts wird eine Alkoholkomponente umfassend einen ein- oder mehrwertigen Alkohol und eine Carbonsäurekomponente umfassend eine ein- oder mehrwertige Carbonsäure oder ein Derivat davon eingesetzt. Dabei sind der ein- oder mehrwertige Alkohol und die ein- oder mehrwertige Carbonsäure so auszuwählen, daß mindestens einer der beiden mehrwertig ist und mindestens einer der beiden mindestens eine nicht-aromatische Doppelbindung aufweist.

Des Weiteren werden die funktionellen Gruppen (B) üblicherweise über die entsprechende Gestaltung der Herstellung des ungesättigten Esterprodukts in das Cyclopentadien-Addukt eingeführt, d.h. Alkohol- und Säurekomponente werden entsprechend gewählt. Gemäß einer bevorzugten Ausführungsform wird ein einoder mehrwertiger gesättigter Alkohol und eine ein- oder mehrwertige ungesättigte Carbonsäure mit vorzugsweise 1-6 nicht-aromatischen Doppelbindungen pro Molekül eingesetzt.

Es ist außerdem bevorzugt, daß die Alkoholkomponente einen mehrwertigen Alkohol umfaßt und besonders bevorzugt ist dann, daß die Carbonsäurekomponente eine einwertige Carbonsäure umfaßt. Insbesondere bevorzugt sind mehrwertige Alkohole mit 2-6 Hydroxylgruppen pro Molekül.

Es können auch Gemische von ein- und/oder mehrwertigen Alkoholen und/oder Gemische von ein- und/oder mehrwertigen Carbonsäuren oder deren Derivate eingesetzt werden, solange die Bedingungen bezüglich Wertigkeit und nichtaromatischer Doppelbindungen erfüllt sind. Es ist des Weiteren möglich, daß ein oder mehrere der verwendeten Alkohole und/oder ein oder mehrere der verwendeten Carbonsäuren in veresterter Form vorliegen. Bei den veresterten Alkoholen bzw. Carbonsäuren handelt es sich vorzugsweise um Triglyceride jedoch sind auch andere Ester möglich.

Beispiele geeigneter ein- oder mehrwertiger Alkohole sind
- einwertige Alkohole der allgemeinen Formel R⁰-OH, wobei R⁰ ein gesättigter oder ungesättigter monovalenter, aliphatischer oder cycloaliphatischer Kohlenwasserstoffrest ist, wobei ein aliphatischer oder cycloaliphatischer Kohlenwasserstoffrest gegebenenfalls ein oder mehrere Ethersauerstoffatome enthält, und gegebenenfalls einen oder mehrere Substituenten unabhängig ausgewählt aus Halogenatomen, NH₂ und SH aufweist,
- zweiwertige Alkohole der allgemeinen Formel HO-R¹-OH, wobei R¹ ein divalenter gesättigter oder ungesättigter, aliphatischer oder cycloaliphatischer Kohlenwasserstoffrest ist, der gegebenenfalls ein oder mehrere Substituenten (z. B. 1 bis 3) unabhängig ausgewählt aus Halogen, NH₂ und SH aufweist, der Kohlenwasserstoffrest kann ein oder mehrere (vorzugsweise nicht mehr als vier) Ethersauerstoffe enthalten und weist bevorzugt zwei bis dreißig, besonders bevorzugt zwei bis zwanzig Kohlenstoffatome auf. Die zweiwertigen Alkohole sind bevorzugt gesättigt. R¹ ist bevorzugt ausgewählt aus aliphatischen C₂-C₁₀ Kohlenwasserstoffresten. Beispiele solcher zweiwertigen Alkohole sind Ethylenglykol, Diethylenglykol, Propylenglykol, Dipropylenglykol, Butylenglykol, Dibutylenglykol und Neopentylglykol,
- höherwertige Alkohole der-allgemeinen Formel

   HO(CH₂)ₙ-CH₂-CR²OH(CH₂)ₘ-CH₂-(CH₂)ₚOH

   wobei n, m und p unabhängig 0, 1, 2 oder 3 sind, und R² ein Wasserstoffatom, ein gesättigter oder ungesättigter aliphatischer oder cycloaliphatischer Kohlenwasserstoffrest mit vorzugsweise 1 bis 12 Kohlenstoffatomen oder ein Rest HO(CH₂)_{q}- ist, worin q= 0, 1, 2 oder 3 bedeutet. Der Kohlenwasserstoffrest kann gegebenenfalls ein oder mehrere (z. B. 1 bis 3) Substituenten unabhängig ausgewählt aus Halogen, NH₂ und SH aufweisen. Beispiele für solche höherwertigen Alkohole sind Glycerin, Trimethylolethan, Trimethylolpropan und Pentaerythrit,
- sonstige höherwertige Alkohole wie Threit, Erythrit, Arabit, Adonit, Xylit, Dipentaerythrit, Sorbit, Manit und Dulcit, wobei die Alkohole gegebenenfalls ein oder mehrere Substituenten unabhängig ausgewählt aus Halogenatomen, SH und NH₂ aufweisen, und
- mehrwertige Alkohole mit aromatischen Ringen der Formel R⁵-(R⁶-OH)ₖ, wobei R⁵ ein aromatischer Kohlenwasserstoffrest wie z. B. Phenyl oder Naphthyl ist, der neben k Substituenten der Formel -R⁶-OH gegebenenfalls ein oder mehrere weitere Substituenten unabhängig ausgewählt aus Halogenatomen, C₁-C₁₂-Alkylresten, NH₂ und SH aufweist und wobei R⁶ ein gesättigter oder ungesättigter aliphatischer Kohlenwasserstoffrest mit 1 bis 12 Kohlenstoffatomen ist und die Einheit -R⁶-OH ein- bis viermal am Aromat gebunden ist (d.h. k ist eine ganze Zahl von 1 bis 4); Beispiele solcher Alkohole sind Benzylalkohol, Dimethylolbenzol und Trimethylolbenzol.

Der verwendete ein- oder mehrwertige Alkohol kann gegebenenfalls ein oder mehrere funktionelle Gruppen ausgewählt aus SH und NH₂ aufweisen.

Es können selbstverständlich auch Gemische von ein- und/oder mehrwertigen Alkoholen wie z.B. den vorstehenden eingesetzt werden; ein oder mehrere Alkohole können gegebenenfalls in veresterter Form vorliegen.

Als ein- oder mehrwertige Alkohole sind aliphatische und cycloaliphatische, gesättigte und ungesättigte C₂-C₃₀-Alkohole (bevorzugter C₂-C₂₀) sowie aromatische Struktureinheiten aufweisende Alkohole mit C₆-C₃₀, bevorzugt. Gemäß einer Ausführungsform umfaßt die Alkoholkomponente einen ein- oder mehrwertigen Alkohol ohne Doppelbindung. Gemäß einer weiteren Ausführungsform umfaßt die Alkoholkomponente einen mehrwertigen Alkohol. Bevorzugt werden solche Alkohole verwendet, die zwei bis sechs Hydroxylgruppen pro Molekül aufweisen. Es ist bevorzugt, daß gesättigte mehrwertige Alkohole eingesetzt werden.

Gemäß einer Ausführungsform besteht die Alkoholkomponente aus einem Gemisch von mehrwertigen Alkoholen, von denen einer oder mehrere in veresterter Form vorliegen können; die Alkohole können mit gesättigten und/oder ungesättigten Carbonsäuren mit 1 bis 20 Kohlenstoffatomen und 0 bis 6 nicht-aromatischen Doppelbindungen verestert sein.

Zur Herstellung des ungesättigten Esterprodukts wird bevorzugt eine Zusammensetzung verwendet, in der die Menge der Alkoholkomponente etwa 10-40 Gew.-%, bezogen auf die Summe aller eingesetzten Komponenten beträgt.

Die Carbonsäurekomponente kann gesättigte und/oder ungesättigte aliphatische und/oder cycloaliphatische und/oder aromatische Monocarbonsäuren umfassen. Sie können einzeln oder als Gemisch verwendet werden. Außerdem können Gemische von Monocarbonsäuren mit mehrwertigen Carbonsäuren verwendet werden.

Geeignete Monocarbonsäuren bzw. deren ebenfalls geeignete Derivate sind z.B. solche der allgemeinen Formel R³-COOH, wobei R³ ein gegebenenfalls durch ein oder mehrere geradkettige oder verzweigte Alkylgruppen substituierter Arylrest mit vorzugsweise 6 bis 10 Kohlenstoffatomen, oder ein geradkettiger oder verzweigter, gesättigter oder ungesättigter, aliphatischer oder cycloaliphatischer Kohlenwasserstoffrest mit vorzugsweise insgesamt 4 bis dreißig Kohlenstoffatomen, besonders bevorzugt 10 bis 20 Kohlenstoffatomen, und gegebenenfalls ein oder mehrere Substituenten unabhängig ausgewählt aus Halogenen, SH, NH₂ und OH ist.

Typische Beispiele für gesättigte Carbonsäuren sind Isodecansäure, Isooctansäure, Cyclohexansäure und längerkettige Carbonsäuren, wie auch natürlich vorkommende gesättigte Fettsäuren. Beispiele für natürlich vorkommende gesättigte Carbonsäuren sind Palmitin- und Stearinsäure. Aber auch technisch vollständig hydrierte Modifikationen natürlicher, ungesättigter Fett- oder Ölsäuren sind gut geeignet.

Als ungesättigte Säuren können z. B. Palmitoleinsäure, Ölsäure, Erucasäure, Ricinolsäure, Linolsäure, Linolensäure, Eläostearinsäure, Arachidonsäure, Chupanodonsäure, Docosahexaensäure und Gemische davon verwendet werden.

Zusätzlich in Betracht zu ziehen sind auch Monocarbonsäuren, die neben der Carboxylgruppe, ein Halogenatom, eine Hydroxylgruppe, Aminogruppe und/oder Thiolgruppe enthalten, wie es z.B. bei der Rizinusölfettsäure, der Dimethylolpropionsäure oder hydrolysierten, epoxidierten Fettsäuren der Fall ist.
Typische Beispiele für aromatische Carbonsäuren sind Benzoesäure und p-tert.-Butylbenzoesäure.
Ansonsten können die Monocarbonsäuren zur Herstellung des ungesättigten Esterprodukts entweder in Form der freien Säure, deren Amide, Halogenide, Anhydride oder in Form von Estern z.B. mit C₁- bis C₁₈-Alkylalkoholen eingesetzt werden.

Geeignete Polycarbonsäuren sind beispielsweise Dicarbonsäuren der allgemeinen Formel HOOC-R⁴-COOH, wobei R⁴ ein divalenter Rest ausgewählt aus einem gesättigten oder ungesättigten, verzweigten oder unverzweigten, aliphatischen oder cycloaliphatischen Rest mit null bis 30 Kohlenstoffatomen (vorzugsweise mit zwei bis sechs Kohlenstoffatomen), und einem gegebenenfalls mit ein oder mehreren C₁-C₆-Alkylgruppen substituierten, aromatischen Kohlenwasserstoffrest mit vorzugsweise insgesamt sechs bis 30 Kohlenstoffatomen ist. Auch diese Dicarbonsäuren können gegebenenfalls ein oder mehrere funktionelle Gruppen ausgewählt aus Hydroxylgruppen, Aminogruppen und Thiolgruppen enthalten.

Beispiele hierfür sind Maleinsäure, Oxalsäure, Malonsäure, Fumarsäure, Bernsteinsäure, Terephthalsäure, Isophthalsäure, Adipinsäure, Glutarsäure, Azelainsäure und o-Phthalsäure.

Aber auch höher funktionelle Polycarbonsäuren, d.h. Polycarbonsäuren mit mehr als zwei (vorzugsweise jedoch nicht mehr als sechs) Carboxylgruppen pro Molekül können verwendet werden.

Beispiele höherfunktioneller Polycarbonsäuren sind Tricarbonsäuren, wie Trimellitsäure, Tricarballylsäure, Trimesinsäure oder Hemimellithsäure, Tetracarbonsäuren wie Pyromellitsäure, oder Polycarbonsäuren mit mehr als vier Carboxylgruppen wie Mellitsäure.

Als Polycarbonsäuren können auch solche Säuren, die zusätzlich ein oder mehrere OH-Gruppen, Aminogruppen oder Thiolgruppen aufweisen, verwendet werden, wie Äpfelsäure, Weinsäure, Mesoweinsäure, Traubensäure oder Citronensäure.

Zur Herstellung des ungesättigten Esterprodukts können die Mono-, Di- und Polycarbonsäuren entweder in Form der freien Säure oder als Amid, Halogenid, Anhydrid oder Ester(z.B. von geradkettigen oder verzweigten aliphatischen C₁-C₁₈-, bevorzugter C₁-C₆-, oder cycloaliphatischen Alkoholen oder Aralkyl-OH wie z.B. C₆-C₂₀) eingesetzt werden.

Gemäß einer bevorzugten Ausführungsform ist das für die Herstellung des Cyclopentadien-Addukts eingesetzte ungesättigte Esterprodukt eines, welches erhältlich ist durch Umsetzung einer Alkoholkomponente, die einen mehrwertigen gesättigten oder ungesättigten Alkohol mit vorzugsweise 2 bis 6 Hydroxylgruppen pro Molekül umfaßt, mit einer Carbonsäurekomponente, welche mindestens 3 Gew.% langkettige ungesättigte Säuren mit 8 bis 30 Kohlenstoffatomen und 1 bis 6 nicht-aromatische Doppelbindungen pro Molekül oder deren Derivate umfaßt.

Die bei dieser Ausführungsform verwendete Carbonsäurekomponente umfaßt mindestens 3 Gew%, vorzugsweise mindestens 20 Gew%, besonders bevorzugt mindestens 40 Gew% langkettige ungesättigte Säuren mit 8 bis 30 Kohlenstoffatomen (vorzugsweise 10 bis 24, besonders bevorzugt 14 bis 20 Kohlenstoffatome) und 1 bis 6 nicht-aromatischen Doppelbindungen (vorzugsweise 1 bis 4) pro Molekül oder deren Derivate wie Amide, Halogenide, Anhydride und Ester z. B. C₁-C₁₈ Alkylester. Geeignete langkettige ungesättigte Säuren sind z.B. Palmitoleinsäure, Ölsäure, Erucasäure, Ricinolsäure, Linolsäure, Linolensäure, Eläostearinsäure, Arachidonsäure, Chupanodonsäure, Docosahexaensäure und Gemische davon.

Gemäß einer dabei noch bevorzugteren Ausführungsform ist das ungesättigte Esterprodukt erhältlich durch Umsetzung eines trocknenden, halbtrocknenden oder nicht-trocknenden Öls mit einem von Glycerin verschiedenen mehrwertigen Alkohol und gegebenenfalls einer oder mehrerer Carbonsäuren (oder von Triglyceriden verschiedenen Carbonsäurederivate). Unter trocknenden/halbtrocknenden/nicht trocknenden Ölen werden dabei fette Öle, die ungesättigte Fettsäuren als Triglycerid enthalten, verstanden. Die (halb)trocknenden Öle trocknen bzw. härten oxidativ unter Einfluß von Luftsauerstoff zu festen, zäh-elastischen Filmen. Das Trocknungsvermögen hängt von dem Anteil der ungesättigten Fettsäuren im Öl sowie von der Anzahl und Lage der Doppelbindungen ab; eine Quantifizierung erfolgt über die Jodzahl, welche für trocknende Öle im allgemeinen etwa >170 und für halbtrocknende Öle im allgemeinen zwischen etwa 100 und 170 liegt. Bei dem (halb)trocknenden/nicht trocknenden Öl handelt es sich vorzugsweise um Leinöl, Sojaöl, Sonnenblumenöl, Safloröl, Rapsöl, Baumwollsaatöl, Tallöl, Fischöl wie Heringsöl und Walöl, Rüböl, Holzöl, Ricinenöl, Perillaöl, Mohnöl, Nußöl, Hanföl, Walöl, Bucheckemöl, Maisöl, Sesamöl, Erdnußöl, Rizinusöl, Kokosöl, Olivenöl, Palmöl, Palmkemöl, Rindertalg, Hammeltalg, Schweineschmalz, Butterfett oder ein Gemisch davon.

Gemäß einer Ausführungsform wird zur Herstellung des ungesättigten Esterprodukts eine Zusammensetzung verwendet, in der die Menge der Monocarbonsäuren bezogen auf die Summe aller eingesetzten Komponenten (d.h. Alkohole plus Carbonsäuren), vorzugsweise 30-95 Gew% besonders bevorzugt 50-80 Gew% beträgt.

Die Herstellung des ungesättigten Esterprodukts nimmt man wegen des ungesättigten Charakters bei niedrigeren Temperaturen vor als bei Alkydharzen (in der Regel zwischen 150 und 250°C), außerdem bevorzugt unter Inertgas (wie z.B. Stickstoff oder Argon), da die- Reaktion des Luftsauerstoffs mit den Doppelbindungen eine Verfärbung oder gar ein Gelatieren verursachen könnte.
Wie in der Harzchemie üblich, wird entstehendes Reaktionswasser durch azeotrope Destillation oder durch Vakuum unterstützt entfernt.

Die stöchiometrischen Verhältnisse werden in der dem Fachmann bekannten Weise so eingestellt, dass ungesättigte Esterprodukte mit Säurezahlen von vorzugsweise 0 bis 40 mg KOH/g Polymer, besonders bevorzugt 1 bis 20, und Hydroxylgehalten von vorzugsweise 0,1 bis 20 Gew%, bevorzugter 0,5 bis 10 Gew% und besonders bevorzugt 1 bis 8 Gew% OH bezogen auf ungesättigtes Esterprodukt erhalten werden.

Der Hydroxylgehalt wird z.B. mit Essigsäureanhydrid bestimmt, gemäß DIN 53240 bzw. ISO 4629. Die Messung der Säurezahl wird nach DIN 53402 bzw. ISO 3682 vorgenommen.

Die erfindungsgemäßen Cyclopentadien-Addukt enthaltenden Zusammensetzungen können als Bindemittel für Beschichtungszusammensetzungen verwendet werden und eignen sich insbesondere für Emballagenlacke. Neben Lösungsmittel und dem Bindemittel auf Basis von Cyclopentadien-Addukt/Phenol- bzw. Aminoharz bzw. Polyisocyanat kann die erfindungsgemäße Beschichtungszusammensetzung übliche weitere Inhaltsstoffe wie Farbstoffe, Pigmente (Metallpigmente sowie anorganische, organische und metallorganische Pigmente), Füllstoffe (z.B. Schwerspat, Kreide, Kaolin etc.) und Additive enthalten; als Additive wären z.B. Fungizide, Bakterizide, Trockenstoffe (z.B. in den Bindemitteln lösliche Schwermetallsalze von Carbonsäuren wie Kobaltoctoat oder Bleinaphthenat), Hautverhinderungsmittel (Antioxidantien), Härtungsbeschleuniger (z.B. p-Toluofsulfonsäure, Phosphorsäure oder Dodecylbenzolsulfonsäure), Verlaufmittel (z.B. auf Silikonbasis), Emulgatoren, Benetzungsmittel und Ausschwimmverhütungsmittel (z.B. kationische und nichtionische Tenside, Silikonöle, Aluminiumsalze von Fettsäuren oder hochdisperse Kieselsäuren), Gleitmittel auf Wachsbasis, Antiabsetzmittel und Mattierungsmittel (z.B. Kieselgur, Talkum, synthetisch gewonnene hochdisperse Kieselsäuren und Polyolefinwachse) zu nennen. Es ist selbstverständlich, daß die aus der erfindungsgemäßen Beschichtungszusammensetzung hergestellte Beschichtung von Nahrungsmittelbehältern keine gesundheitlich bedenklichen Stoffe enthalten sollte, um gesundheitliche Beeinträchtigungen auszuschließen. Weiterer Bestandteil der erfindungsgemäßen Beschichtungszusammensetzungen ist ein Lösungsmittel oder Lösungsmittelgemisch. Beispiele hierfür sind z.B. Kohlenwasserstoffe (wie Testbenzin und Xylol), Alkohole z. B. n- oder iso-Butanol, Ester wie z. B. Butylacetat, veretherte Ester wie Methoxybutylacetat und Ketone wie Cyclohexanon.

Die erfindungsgemäße Beschichtungszusammensetzung enthält vorzugsweise 10 bis 90 Gew.% erfindungsgemäße Bindemittelzusammensetzung bezogen auf das Gesamtgewicht der Zusammensetzung, noch bevorzugter 30 bis 80 Gew.%. Pro Gewichtsteil Cyclopentadien-Addukt werden vorzugsweise 0,05 bis 10 Gewichtsteile der zweiten Komponente (d.h. Phenolharz, Aminoharz, Polyisocyanate), besonders bevorzugt 0,1 bis 1 Gewichtsteil verwendet. Die Menge der weiteren von Lösungsmittel verschiedenen Inhaltsstoffe beträgt vorzugsweise insgesamt 0 bis 60 Gew.% der Zusammensetzung, besonders bevorzugt 0 bis 30 Gew.%.

Die Herstellung von pigmentierten und unpigmentierten Beschichtungszusammensetzungen erfolgt nach einem Verfahren das die folgenden Schritte umfaßt:
(a) Bereitstellen mindestens einer Komponente ausgewählt aus Phenolharzen, Aminoharzen, polyfunktionellen Isocyanaten und Derivaten davon, wobei diese Komponente funktionelle Gruppen (A) aufweist,
(b) Herstellen eines ungesättigten Esterprodukts wie vorstehend beschrieben,
(c) Umsetzung des in Schritt (b) erhaltenen ungesättigten Esterprodukts mit einem gegebenenfalls substituierten Cyclopentadien bei Raumtemperatur oder erhöhter Temperatur, wobei ein Cyclopentadien-Addukt erhalten wird, das funktionelle Gruppen (B) aufweist, die mit den funktionellen Gruppen (A) der Komponente (a) eine chemische Bindung eingehen können,
(d) Vermischen des in Schritt (c) erhaltenen Cyclopentadien-Adduktes mit mindestens einem Reaktionspartner gemäß (a)
   und gegebenenfalls
(e) Vermischen des in Schritt (d) erhaltenen Gemisches mit mindestens einem Lösungsmittel und gegebenenfalls einem oder mehreren weiteren Inhaltsstoffen ausgewählt aus Farbstoffen, Pigmenten, Füllstoffen und Additiven, wobei ein oder mehrere Inhaltsstoffe und/oder Lösungsmittel auch bereits der in Schritt (a) bereitgestellten Komponente und/oder dem in Schritt (c) erhaltenen Cyclopentadien-Addukte beigemischt werden können.

Die Herstellung der erfindungsgemäßen Cyclopentadien-Addukt enthaltenden Beschichtungszusammensetzungen erfolgt durch das Mischen geeigneter Reaktionspartner (Schritt (d) vorstehend) bei Raumtemperatur oder bei erhöhten Temperaturen, vorzugsweise bei 60-80°C. Hierbei kann sich im Falle des Mischens bei erhöhten Temperaturen, also im Falle einer Vorreaktion der Cyclopentadien-Addukte mit den geeigneten Reaktionspartnern, letztlich eine Verbesserung der Eigenschaften der entsprechenden Beschichtung ergeben.

Es werden übliche Vorrichtungen zum Mischen verwendet. Gemäß einer Ausführungsform kann auch bereits das Cyclopentadien-Addukt (Komponente (b)) und/oder der Reaktionspartner (Komponente (a)) mit einem oder mehreren weiteren Inhaltsstoffe und/oder Lösungsmitteln vermischt werden, bevor die beiden Komponenten in Schritt (d) vermischt werden. Je nachdem, ob weitere Inhaltsstoffe und/oder Lösungsmittel nötig sind oder nicht, ist Schritt (e) erforderlich oder kann weggelassen werden.

Geeignete Lösungsmittel für die Beschichtungszusammensetzungen sind z.B. Alkohole wie n-Butanol und iso-Butanol, Ester und veretherte Ester wie 3-Methoxy-n-butylacetat und Butyldiglykolacetat, aliphatische Kohlenwasserstoffe wie Testbenzin und Spezialbenzin 140/165, aromatische Kohlenwasserstoffe wie Diisopropylnaphtalin und Mischungen von aromatischen Kohlenwasserstoffen wie Hisol 10® und Hisol 15®. Das für bestimmte Komponenten beste Lösungsmittel oder Lösungsmittelgemisch kann vom Fachmann leicht aufgefunden werden.

Die Bindemittelzusammensetzungen umfassend mindestens eine Komponente (a) und mindestens eine Komponente (b) haben üblicherweise einen Feststoffgehalt von 2 bis 100 %, vorzugsweise von 55 bis 85 % und zeichnen sich bei Verwendung von Phenolharzen, Aminoharzen oder blockierten Polyisocyanaten durch eine ausgezeichnete Lagerstabilität aus. Die Beschichtungszusammensetzungen lassen sich daraus durch Zugabe von (weiteren) Lösungsmittel und/oder weiteren Inhaltsstoffen herstellen. Bei Verwendung unblockierter polyfunktioneller Isocyanate ist es wegen deren Reaktivität bevorzugt, das Vermischen mit dem Cyclopentadien-Addukt erst kurz vor der Applikation der Beschichtungszusammensetzung auf den zu beschichtenden Gegenstand durchzuführen.

Die erfindungsgemäße Beschichtungszusammensetzung kann auf Karton, Holz, Glas, Kunststoffe, sowie Metall und Metalllegierungen aufgebracht werden. Bevorzugt wird sie zur Beschichtung von metallischen Oberflächen verwendet, wie Weißblech, Schwarzblech, TFS und Aluminiumblech; auf diesen Oberflächen ist die Haftung besonders gut. Die erfindungsgemäßen Beschichtungszusammensetzungen sind sowohl als Grundierungen als auch Decklacke geeignet. Sie genügen den Vorgaben der Food and Drug Adminstration (FDA) und des US Department of Agriculture (USDA), lassen einen gewissen Spielraum bezüglich der Trocknungsparameter offen und weisen eine hohe Lagerbeständigkeit auf.

Die erfindungsgemäßen Beschichtungszusammensetzungen sind durch konventionelle Ausrüstung applizierbar, so können sie z.B. auf das zu beschichtende Material gespritzt, gegossen, mit Rollen aufgetragen oder mit einem Rakel appliziert werden oder eine Tauchbeschichtung durchgeführt werden. Die Art der Aufbringung ist nicht besonders beschränkt. Als besondere Beschichtungsverfahren sind das Coil- und Tafelbeschichtungsverfahren zu nennen.
Bei erfindungsgemäßen Beschichtungszusammensetzungen, die Phenolharze, Aminoharze und/oder blockierte Polyisocyanate enthalten, brennt man nach dem Trocknen die Beschichtung vorzugsweise ein (sofern das zu beschichtende Material dies zuläßt); dies geschieht bevorzugt bei etwa 170°C bis 220°C und über einen Zeitraum von etwa 5 bis 30 Minuten. Enthält die Zusammensetzung freie Polyisocyanate ist ein Einbrennen in der Regel nicht nötig.
Man erhält eine klare und hochglänzende Beschichtung mit einer Schichtdicke von vorzugsweise 2-50 µm, bevorzugter 2-20 µm und besonders bevorzugt 4-10 µm.

Die vorliegende Erfindung betrifft auch Gegenstände insbesondere Behältnisse, wie Dosen, Fässer und Tanks, die eine Beschichtung aufweisen, die durch Auftragen der erfindungsgemäßen Beschichtungszusammensetzung, Trocknen und gegebenenfalls Einbrennen hergestellt wurde. Bei der Herstellung von Behältnissen z.B. aus Metall ist es möglich, das Behältnis zuerst zu formen und dann zu beschichten oder die Beschichtung vor dem Formen durchzuführen. Die erfindungsgemäßen Beschichtungszusammensetzungen eignen sich für Außenbeschichtungen von Behältnissen, aufgrund ihrer Chemikalienbeständigkeit aber auch für Innenbeschichtungen.

Neben Behältnissen können auch andere Gegenstände wie z.B. Kronkorken, Deckel zum Verschließen von Gläsern etc., Rohre, Drähte, Wärmetauscher etc. mit den erfindungsgemäßen Beschichtungszusammensetzungen beschichtet werden.

Die erfindungsgemäßen beschichteten Gegenstände zeichnen sich durch eine Beschichtung mit hohem Glanz, Klarheit, guter Haftung, Kratzfestigkeit, einer hohen Beständigkeit gegenüber Chemikalien und Sterilisation aus; außerdem hat die Beschichtung im Falle von Behältnissen keinen Einfluss auf den Geschmack, Geruch oder das Erscheinungsbild der Inhalte wie z.B. Lebensmittel. Zudem weisen die Beschichtungen geeignete mechanische Eigenschaften in Hinblick auf Flexibilität und Härte auf.

Die vorliegende Erfindung betrifft außerdem einen Kit, umfassend 2 Behälter, wobei der erste Behälter Komponente (a) und der zweite Behälter Komponente (b) enthält. Der Kit kann gegebenenfalls noch mindestens ein Lösungsmittel und/oder weitere Inhaltsstoffe ausgewählt aus Farbstoffen, Pigmenten, Füllstoffen und Additiven enthalten, wobei das Lösungsmittel und/oder die weiteren Inhaltsstoffe in einem oder mehreren zusätzlichen Behältern vorliegen können und/oder im ersten und/oder zweiten Behälter zugegen sind.

Die Erfindung wird nun durch die folgenden Beispiele näher erläutert.

### Beispiele

### Beispiel 1: Herstellung von Cyclopentadien-Addukten, speziell von cyclopentadienmodifizierten Copolymerharzen auf der Basis trocknender und halbtrocknender Öle

### Copolymerharz A

Aus 21,20 kg Sojaöl, 4,00 g Lithiumhydroxid und 0,75 kg Pentaerythrit und 0,61 kg Phthalsäureanhydrid wurde bei 220-240°C in der dem Fachmann für Polyester-oder Alkydharze bekannten Weise ein ungesättigtes Esterprodukt unter azotroper Destillation hergestellt, wobei destilliert wurde bis eine Säurezahl kleiner 12 erreicht war. Dieses so hergestellte ungesättigte Esterprodukt wurde anschließend mit 17,30 kg Dicyclopentadien in einem druckfestem Reaktionsgefäß bei 260-280°C umgesetzt, wobei der Druck vorrübergehend auf ca. 6 bar Überdruck anstieg.
Die Mischung wurde solange unter Druck und Temperatur gehalten, bis 60,00 g einer Probe des Reaktionsgemisches vermischt mit 40,00 g Testbenzin eine Viskosität von 2000 mPa·s bei 25°C - gemessen nach DIN 53015 - erreichten.
Bei Erreichen dieser Viskosität wurde die Reaktion durch Kühlen und Entspannen des Reaktionsdruckes auf Normaldruck beendet.
Das noch warme Harz wurde mit 13,50 kg Testbenzin abgedünnt und hatte dann einen Feststoffgehalt von 74,2% (gemessen nach DIN 55671) und eine Viskosität von 3100 mPa·s bei 25°C(gemessen nach DIN 53015).

### Copolymerharz B

Aus 20,80 kg Leinöl, 4,00 g Lithiumhydroxid, 1,78 kg Pentaerythrit und 1,43 kg Phthalsäureanhydrid wurde - wie unter Copolymerharz A beschrieben - ein ungesättigtes Esterprodukt hergestellt. Dieses ungesättigte Esterprodukt wurde dann - wie vorher beschrieben - mit 12,60 kg Dicyclopentadien umgesetzt. Die Reaktion wurde beendet, als eine Mischung aus 70,00 g Harzprobe und 30,00 g Testbenzin eine Viskosität von 1000 mPa·s (bei 25°C) aufwies.
Es wurde mit 12,50 kg Testbenzin abgedünnt, was einen Feststoffgehalt gemäß DIN 55671 von 75,1% und eine Viskosität, gemäß DIN 53015 von 1640 mPa·s (bei 25°C) ergab.

### Beispiel 2: Herstellung von Beschichtungszusammensetzungen

### 2.1. Beschichtungszusammensetzung auf der Basis von Copolymerharz A und Phenolharz

Zu 27,00 kg Copolymerharz A wurden unter Rühren bei Raumtemperatur eine Lösung von 0,65 kg aminblockierter Dodecylbenzolsulfonsäure in einer Mischung aus 1,12 kg Isopropanol, 0,13 kg Wasser und 13,20 kg Diisopropylnaphthalin gegeben und dann 12,30 kg kommerzielles Phenolharz A. Es wurde noch mit 10,00 kg 3-Methoxy-n-butylacetat verdünnt, woraus eine klare, 40%ige Lösung mit hoher Lagerbeständigkeit resultierte.

### 2.2. Beschichtungszusammensetzung auf der Basis von Copolymerharz B und Phenolharz

27,00 kg Copolymerharz B wurden wie unter 2.1. angegeben mit 0,50 kg aminblockierter Dodecylbenzolsulfonsäure, 1,30 kg Isopropylalkohol, 0,13 kg Wasser, 12,00 kg Diisopropyl-naphthalin und 13,10 kg Phenolharz B (60%iges in n-Butanol gelöstes butyliertes Phenolharz, Molverhältnis Formaldehyd zu Phenol = 2,5) (60%iges in n-Butanol gelöstes butyliertes Kresolharz, Molverhältnis Formaldehyd zu Kresol = 2,5) gemischt und mit 10,00 kg 3-Methoxy-n-butylacetat verdünnt. Hieraus ergab sich eine klare, lagerfähige 41%ige Lösung.

### 2.3. Beschichtungszusammensetzung auf der Basis von Copolymerharz A und Aminharz

40,00 kg Copolymerharz A wurden in Anlehnung an 2.1. mit 0,22 kg aminblockierter Dodecylsulfonsäure, 0,60 kg Isopropylalkohol, 0,06 kg Wasser, 8,00 kg Diisopropyl-naphthalin und 3,28 kg Aminharz A (Lösungsmittelfreies HMMM-Harz) gemischt und mit 3,70 kg Diisopropylnaphthalin verdünnt. Hieraus ergab sich eine klare, lagerfähige 60%ige Lösung.

### 2.4. Beschichtungszusammensetzung auf der Basis von Copolymerharz A und einem Gemisch aus einem Phenolharz und Aminharz

32,00 kg Copolymerharz A wurden in Anlehnung an 2.1. mit 0,52 kg aminblockierter Dodecylsulfonsäure, 1,35 kg Isopropylalkohol, 0,14 kg Wasser, 14,78 kg Diisopropyl-naphthalin, 11,27 Phenolharz A und 0,68 kg Aminharz B (77%iges in n-Butanol gelöstes butyliertes Benzoguanaminharz) gemischt und mit 11,85 kg 3-Methoxy-n-butylacetat verdünnt. Hieraus ergab sich eine klare, lagerfähige 60%ige Lösung.

### 2.5. Beschichtungszusammensetzung auf der Basis von Copolymerharz A und einem Gemisch aus Phenolharz und einem Isocyanatharz

27,00kg Copolymerharz A wurden in Anlehnung an 2.1. mit 0,65kg aminblockierter Dodecylbenzolsulfonsäure, 1,12kg Isopropanol, 0,13kg Wasser, 13,20kg Diisopropyl-naphthalin, 11,00kg Phenolharz A und 1,70kg Isocyanatharz (75%iges blockiertes aromatisches Produkt, das in Hisol 10® gelöst ist und einen Isocyanatgehalt nach DIN 53185 von 9,6% aufweist) gemischt und mit 10,00kg 3-Methoxy-n-butylacetat verdünnt, woraus eine klare, 40%ige Lösung mit hoher Lagerbeständigkeit resultierte.

Die hergestellten Lacke zeigten bei einer 3-monatigen Lagerung bei Raumtemperatur keine Veränderungen wie Phasenseparation, Niederschlag oder Trübung. Die Eigenschaften der aus den 3 Monaten gelagerten Lacken hergestellten Beschichtungen lassen keinerlei Qualitätsminderungen erkennen verglichen mit Beschichtungen, die mit frisch hergestelltem Lack hergestellt wurden.

### Beispiel 3: Applikation und Trocknung der gemäß Beispiel 2 hergestellten Beschichtungszusammensetzungen auf Weißblech

Die Lacke wurden mittels 25µm-Rackel auf Weissblech aufgezogen und fünfzehn Minuten bei 200°C eingebrannt. Man erhielt jeweils eine goldfarbene, klare, kratzfeste und hochglänzende Beschichtung mit einer Schichtdicke von 4-6µm. Die Beschichtungen wiesen eine sehr gute Haftung (Gt=TT=0) und hohe Acetonbeständigkeit (>100doublerubs) sowohl vor als auch nach Belastungen bei 130°C über 30min in destilliertem Wasser, 3%iger Essigsäure, 3%iger Kochsalzlösung und 2%iger Harnstofflösung, die keine Veränderungen im Erscheinungsbild der Beschichtungen bedingten, auf. Zudem genügten die Beschichtungen den branchenüblichen Anforderungen in Bezug auf Härte und Flexibilität.

So erhielt man sowohl bei praxisnahen Prüfverfahren, wie bei der schlagartigen Biegebeanspruchung mit einem Schlagfalt-Prüfgerät oder bei der Herstellung von zylindrischen Näpfchen mit einer Tiefzieh-Näpfchen-Prüfmaschine, als auch in der Praxis bei der Herstellung von Fischdosen oder Konservendosendeckeln, bei der man keinerlei Rißbildung oder Delaminierung beobachtete, positive Ergebnisse, die den Ergebnissen handelsüblicher und bewährter Epoxidharz-haltiger Emballagen-Beschichtungen zumindest ebenbürtig waren, in manchen Fällen auch übertrafen.

## Patentansprüche

1. Zusammensetzung umfassend
(a) mindestens eine Komponente, ausgewählt aus Phenolharzen, Aminoharzen, polyfunktionellen Isocyanaten und Derivaten davon, und
(b) mindestens ein Cyclopentadien-Addukt als weitere Komponente, erhältlich durch Umsetzung mindestens eines ungesättigten Esterprodukts mit einem gegebenenfalls substituierten Cyclopentadien,
wobei das ungesättigte Esterprodukt erhältlich ist durch Umsetzung einer Alkoholkomponente, umfassend einen ein- oder mehrwertigen Alkohol mit einer Carbonsäurekomponente, umfassend eine ein- oder mehrwertige Carbonsäure oder ein Derivat davon,
mit der Maßgabe, daß der ein- oder mehrwertige Alkohol und/oder die ein- oder mehrwertige Carbonsäure mindestens eine nicht-aromatische Doppelbindung aufweisen und
mit der Maßgabe, daß entweder der ein- oder mehrwertige Alkohol oder die einoder mehrwertige Carbonsäure oder beide mehrwertig sind,
wobei die Komponente (b) funktionelle Gruppen (B) aufweist, die mit den funktionellen Gruppen (A) der Komponente (a) eine chemische Bindung eingehen können.

2. Zusammensetzung nach Anspruch 1, wobei der ein- oder mehrwertige Alkohol keine nicht-aromatische Doppelbindung aufweist und die ein- oder mehrwertige Carbonsäure oder deren Derivat mindestens eine nicht-aromatische Doppelbindung aufweist.

3. Zusammensetzung nach Anspruch 1 oder 2, wobei die Alkoholkomponente einen mehrwertigen Alkohol umfaßt.

4. Zusammensetzung nach Anspruch 3, wobei die Carbonsäurekomponente eine einwertige Carbonsäure oder deren Derivat umfaßt und die Alkoholkomponente einen mehrwertigen Alkohol umfaßt.

5. Zusammensetzung nach Anspruch 3 oder 4, wobei der mehrwertige Alkohol zwei bis sechs Hydroxylgruppen pro Molekül aufweist.

6. Zusammensetzung nach einem der Ansprüche 1 bis 3
wobei das ungesättigte Esterprodukt erhältlich ist durch Umsetzung einer Alkoholkomponente, umfassend einen mehrwertigen Alkohol mit einer Carbonsäurekomponente, umfassend mindestens 3 Gew% langkettige ungesättigte Säuren mit 8 bis 30 Kohlenstoffatomen und 1 bis 6 nicht-aromatische Doppelbindungen oder deren Derivate.

7. Zusammensetzung nach einem der Ansprüche 1-6, wobei der ein- oder mehrwertige Alkohol ausgewählt ist aus:
(a) einwertigen Alkoholen der allgemeinen Formel R⁰-OH, wobei R⁰ ein gesättigter oder ungesättigter monovalenter aliphatischer oder cycloaliphatischer Kohlenwasserstoffrest ist, wobei der aliphatische oder cycloaliphatische Kohlenwasserstoffrest gegebenenfalls ein oder mehrere Ethersauerstoffatome enthält und gegebenenfalls einen oder mehrere Substituenten, unabhängig ausgewählt aus Halogenatom, NH₂ und SH, aufweist,
(b) zweiwertigen Alkoholen der allgemeinen Formel HO-R¹-OH, wobei R¹ ein divalenter gesättigter oder ungesättigter, aliphatischer oder cycloaliphatischer Kohlenwasserstoffrest ist, der gegebenenfalls ein oder mehrere Ethersauerstoffatome enthält und gegebenenfalls einen oder mehrere Substituenten unabhängig ausgewählt aus Halogenatomen, SH und NH₂, aufweist,
(c) höherwertigen Alkoholen der allgemeinen Formel
HO(CH₂)ₙ-CH₂-CR²OH (CH₂)ₘ-CH₂-(CH₂)ₚOH
wobei n, m und p unabhängig 0, 1, 2 oder 3 sind, und R² ein Wasserstoffatom, ein monovalenter gesättigter oder ungesättigter aliphatischer oder cycloaliphatischer Kohlenwasserstoffrest oder ein Rest HO(CH₂)_{q}- ist, worin q=0, 1, 2 oder 3 bedeutet, wobei der aliphatische oder cycloaliphatische Kohlenwasserstoffrest gegebenenfalls einen oder mehrere Substituenten, unabhängig ausgewählt aus Halogenatomen, NH₂ und SH, aufweist,
(d) der Gruppe der höherwertigen Alkoholen bestehend aus Threit, Erythrit, Arabit, Adonit, Xylit, Pentaerythrit, Sorbit, Manit und Dulcit, wobei die Alkohole gegebenenfalls einen oder mehrere Substituenten,ausgewählt aus SH, Hälogenatom und NH₂, aufweisen, und
(e) mehrwertigen Alkoholen mit aromatischen Ringen der Formel R⁵-(R⁶-OH)ₖ,
wobei R⁵ ein aromatischer Kohlenwasserstoffrest ist, der neben k Substituenten der Formel -R⁶-OH gegebenenfalls einen oder mehrere weitere Substituenten unabhängig ausgewählt aus Halogenatomen, C₁-C₁₂-Alkylresten, NH₂ und SH, aufweist, und wobei R⁶ gleich oder verschieden sein kann und einen divalenten gesättigten oder ungesättigten aliphatischen Kohlenwasserstoffrest mit 1 bis 12 Kohlenstoffatomen darstellt und k eine ganze Zahl von 1 bis 4 ist.

8. Zusammensetzung nach einem der Ansprüche 3 bis 7, wobei der mehrwertige Alkohol gesättigt ist.

9. Zusammensetzung nach einem der Ansprüche 1 bis 8, wobei die Alkoholkomponente aus einem Gemisch von ein- und/oder mehrwertigen Alkoholen besteht, von denen einer oder mehrere gegebenenfalls in veresterter Form vorliegen können.

10. Zusammensetzung nach einem der Ansprüche 1 bis 9, wobei die Carbonsäurekomponente aus einem Gemisch von ein- und/oder mehrwertigen Carbonsäuren besteht, von denen eine oder mehrere gegebenenfalls in veresterter Form vorliegen können.

11. Zusammensetzung nach Anspruch 6, wobei das ungesättigte Esterprodukt erhältlich ist durch Umsetzung eines trocknenden, halbtrocknenden oder nicht trocknenden Öls mit einem mehrwertigen Alkohol und gegebenenfalls einer oder mehrerern Carbonsäuren oder von Triglyzeriden verschiedenen Carbonsäurederivaten.

12. Zusammensetzung nach Anspruch 11, wobei der mehrwertige Alkohol von Glycerin verschieden ist.

13. Zusammensetzung nach Anspruch 6, 11 und 12, wobei die Carbonsäurekomponente Leinöl, Sojaöl, Sonnenblumenöl, Safloröl, Rapsöl, Baumwollsaatöl, Tallöl, Fischöl, Rüböl, Holzöl, Ricinenöl, Perillaöl, Mohnöl, Nußöl, Hanföl, Walöl, Bucheckemöl, Maisöl, Sesamöl, Erdnußöl, Rizinusöl, Kokosöl, Olivenöl, Palmöl, Palmkemöl, Rindertalg, Hammeltalg, Schweineschmalz, Butterfett oder ein Gemisch davon umfaßt.

14. Zusammensetzung nach einem der Ansprüche 1 bis 13, wobei die Carbonsäurekomponente mindestens eine Carbonsäure oder deren Derivat umfaßt, die ausgewählt ist aus:
(a) Monocarbonsäuren der allgemeinen Formel
R³-COOH
wobei R³ ein gegebenenfalls mit einer oder mehreren geradkettigen und verzweigten Alkylgruppen substituierter Arylrest oder ein geradkettiger oder verzweigter aliphatischer oder cycloaliphatischer gesättigter oder ungesättigter Kohlenwasserstoffrest mit gegebenenfalls einem oder mehreren Substituenten, ausgewählt aus Halogenatomen, NH₂, SH und OH,ist,
(b) Dicarbonsäuren der allgemeinen Formel
HOOC-R⁴-COOH
wobei R⁴ ein divalenter Rest ausgewählt aus einem verzweigten oder unverzweigten aliphatischen oder cycloaliphatischen gesättigten oder ungesättigten Rest mit 0 bis 30 Kohlenstoffatomen und einem gegebenenfalls mit einer oder mehreren C₁-C₆ Alkylgruppen substituierten aromatischen Kohlenwasserstoffrest, ist,
(c) Polycarbonsäuren, ausgewählt aus Trimellitsäure, Tricarballylsäure, Trimesinsäure, Heminallitsäure, Pyromellitsäure und Mellitsäure, und
(d) der Gruppe der Carbonsäuren, bestehend aus Ricinensäure, Sorbinsäure, Acrylsäure, Methacrylsäure und Crotonsäure,
wobei eine oder mehrere der Carboxylgruppen gegebenenfalls nicht in freier Form sondern als Säureamid, Säurehalogenid, Anhydrid oder Ester vorliegen und
wobei die mindestens eine Carbonsäure gegebenenfalls eine oder mehrere funktionelle Gruppen, ausgewählt aus Hydroxylgruppen, Thiolgruppen und Aminogruppen, aufweist.

15. Zusammensetzung nach Anspruch 6, wobei die langkettige ungesättigte Säure ausgewählt wird aus Palmitoleinsäure, Ölsäure, Erucasäure, Ricinolsäure, Linolsäure, Linolensäure, Eläosterinsäure, Arachidonsäure, Clupanodonsäure, Docosahexaensäure und Gemischen davon.

16. Zusammensetzung nach einem der Ansprüche 1 bis 15, wobei das gegebenenfalls substituierte Cyclopentadien als gegebenenfalls entsprechend substituiertes Dicyclopentadien eingesetzt und in-situ daraus erzeugt wird.

17. Beschichtungszusammensetzung umfassend:
(a) eine Zusammensetzung gemäß einem der Ansprüche 1 bis 16
(b) mindestens ein Lösungsmittel
und
(c) gegebenenfalls einen weiteren Inhaltsstoff ausgewählt aus Farbstoffen, Pigmenten, Füllstoffen, Additiven und Gemischen davon.

18. Beschichtungszusammensetzung nach Anspruch 17, wobei die Menge an Zusammensetzung (a) 10 bis 90 Gew.%, bezogen auf die Beschichtungszusammensetzung, beträgt.

19. Verwendung einer Zusammensetzung gemäß einem der Ansprüche 1 bis 16 als Bindemittel für Lacke.

20. Verwendung nach Anspruch 19, wobei es sich bei dem Lack um einen Emballagenlack handelt.

21. Verwendung einer Beschichtungszusammensetzung gemäß Anspruch 17 oder 18 zur Beschichtung von Gegenständen.

22. Verwendung nach Anspruch 21, wobei der Gegenstand aus Metall ist.

23. Gegenstand, umfassend eine Beschichtung, wobei die Beschichtung durch Auftragung einer Beschichtungszusammensetzung gemäß Anspruch 17 oder 18, Trocknen und gegebenenfalls Einbrennen hergestellt wurde.

24. Gegenstand nach Anspruch 23, wobei der Gegenstand ein Behältnis ist.

25. Gegenstand nach Anspruch 24, wobei das Behältnis eine Dose, ein Fass oder ein Tank ist.

26. Gegenstand nach einem der Ansprüche 23 bis 25, wobei der Gegenstand aus Metall ist.

27. Gegenstand nach einem der Ansprüche 24 bis 26, wobei die Beschichtung mindestens auf der Innenseite des Behältnisses vorhanden ist.

28. Verfahren zum Beschichten von Metall, Kunststoff, Glas, Karton oder Holz, umfassend das Aufbringen einer Beschichtungszusammensetzung gemäß Anspruch 17 oder 18, Trocknen und gegebenenfalls Einbrennen.

29. Verfahren nach Anspruch 28, wobei das Metall ein Weißblech, Schwarzblech, TFS (=tin free steel) oder Aluminiumblech ist.

30. Verfahren nach Anspruch 29, wobei die Beschichtungszusammensetzung nur auf eine Seite des Blechs aufgebracht wird.

31. Verfahren zum Herstellen von Behältnissen, umfassend
(a) Beschichten von Blech gemäß dem Verfahren von Anspruch 29 auf mindestens einer Seite
(b) Formen von Behältnissen aus dem in Schritt (a) erhaltenen beschichteten Blech.

32. Verfahren zum Herstellen von Behältnissen, umfassend
(a) Formen des Behältnisses aus Metall, Kunststoff, Glas, Karton oder Holz
(b) Beschichten des in Schritt (a) erhaltenen Behältnisses auf der Innen- und/oder Außenseite gemäß dem Verfahren von Anspruch 28.

33. Verfahren zur Herstellung einer Beschichtungszusammensetzung gemäß Anspruch 17 oder 18, umfassend:
(a) Bereitstellen mindestens einer Komponente ausgewählt aus Phenolharzen, Aminoharzen, polyfunktionellen Isocyanaten und Derivaten davon, wobei diese Komponente funktionelle Gruppen (A) aufweist,
(b) Herstellen eines ungesättigten Esterprodukts wie in einem der Ansprüche 1 bis 15 beschrieben,
(c) Umsetzung des in Schritt (b) erhaltenen ungesättigten Esterprodukts mit einem gegebenenfalls substituierten Cyclopentadien bei Raumtemperatur oder erhöhter Temperatur, wobei ein Cyclopentadien-Addukt erhalten wird, das funktionelle Gruppen (B) aufweist, die mit den funktionellen Gruppen (A) der Komponente (a) eine chemische Bindung eingehen können,
(d) Vermischen des in Schritt (c) erhaltenen Cyclopentadien-Adduktes mit mindestens einem Reaktionspartner gemäß (a)
und gegebenenfalls
(e) Vermischen des in Schritt (d) erhaltenen Gemisches mit mindestens einem Lösungsmittel und gegebenenfalls einem oder mehreren weiteren Inhaltsstoffen, ausgewählt aus Farbstoffen, Pigmenten, Füllstoffen und Additiven,
wobei ein oder mehrere Inhaltsstoffe und/oder Lösungsmittel auch bereits der in Schritt (a) bereitgestellten Komponente und/oder dem in Schritt (c) erhaltenen Cyclopentadien-Adduktes beigemischt werden können bevor die in Schritt (a) bereitgestellte Komponente und das in Schritt (c) erhaltene Cyclopentadien-Addukt miteinander in Kontakt gebracht werden.

34. Verfahren nach Anspruch 33, wobei das gegebenenfalls substituierte Cyclopentadien als gegebenenfalls entsprechend substituiertes Dicyclopentadien eingesetzt und in-situ daraus erzeugt wird.

35. Kit, umfassend
(i) einen ersten Behälter, enthaltend mindestens eine Komponente (a) ausgewählt aus Phenolharzen, Aminoharzen, polyfunktionellen Isocyanaten und Derivaten davon, wobei die Komponente (a) funktionelle Gruppen (A) aufweist, und
(ii) einen zweiten Behälter, enthaltend mindestens ein Cyclopentadien-Addukt, welches erhältlich ist durch Umsetzung wie in einem der Ansprüche 1 bis 16 beschrieben, und funktionelle Gruppen (B) aufweist, die mit den funktionellen Gruppen (A) der Komponente des ersten Behälters eine chemische Bindung eingehen können.

36. Kit nach Anspruch 35, ferner umfassend mindestens ein Lösungsmittel und gegebenenfalls ein oder mehrere Inhaltsstoffe ausgewählt aus Farbstoffen, Pigmenten, Füllstoffen und Additiven, wobei das Lösungsmittel und/oder die weiteren Inhaltsstoffe im ersten und/oder zweiten Behälter und/oder in einem oder mehreren zusätzlichen Behältern vorliegen.

## Claims

1. Composition comprising
(a) at least one component selected from phenolic resins, amino resins, polyfunctional isocyanates and derivatives thereof, and
(b) at least one cyclopentadiene adduct as an additional component obtainable by reacting at least one unsaturated ester product with an optionally substituted cyclopentadiene,
wherein the unsaturated ester product is obtainable by reacting an alcohol component, comprising a mono- or polyhydric alcohol, with a carboxylic acid component comprising a mono- or polybasic carboxylic acid or a derivative thereof, with the proviso that the mono- or polyhydric alcohol and/or the mono- or polybasic carboxylic acid comprise at least one non-aromatic double bond and
with the proviso that the mono- or polyhydric alcohol is polyhydric and/or the mono- or polybasic carboxylic acid is polybasic,
wherein the component (b) comprises functional groups (B) which can enter into a chemical bond with the functional groups (A) of component (a).

2. Composition according to claim 1, wherein the mono- or polyhydric alcohol does not comprise a non-aromatic double bond and the mono- or polybasic carboxylic acid or a derivative thereof comprises at least one non-aromatic double bond.

3. Composition according to claim 1 or 2, wherein the alcohol component comprises a polyhydric alcohol.

4. Component according to claim 3, wherein the carboxylic acid component comprises a monobasic carboxylic acid or a derivative thereof and the alcohol component comprises a polyhydric alcohol.

5. Composition according to claim 3 or 4, wherein the polyhydric alcohol comprises two to six hydroxyl groups per molecule.

6. Composition according to any of claims 1 to 3, wherein the unsaturated ester product is obtainable by reacting an alcohol component comprising a polyhydric alcohol with a carboxylic acid component comprising at least 3 wt.-% of long-chain unsaturated acids with 8 to 30 carbon atoms and 1 to 6 non-aromatic double bonds or derivatives thereof.

7. Composition according to any of claims 1 to 6, wherein the mono- or polyhydric alcohol is selected from:
(a) monohydric alcohols of the general formula R⁰-OH, wherein R⁰ is a saturated or unsaturated monovalent aliphatic or cycloaliphatic hydrocarbon group, wherein the aliphatic or cycloaliphatic hydrocarbon group optionally comprises one or more ether oxygen atoms and optionally comprises one or more substituents independently selected from a halogen atom, NH₂ and SH,
(b) dihydric alcohols of the general formula HO-R¹-OH, wherein R¹ is a divalent saturated or unsaturated aliphatic or cycloaliphatic hydrocarbon group, which optionally comprises one or more ether oxygen atoms and optionally comprises one or more substituents independently selected from halogen atoms, SH and NH₂,
(c) polyhydric alcohols of the general formula
HO(CH₂)ₙ-CH₂-CR²OH(CH₂)ₘ-CH₂-(CH₂)ₚOH
wherein n, m and p are independently 0, 1, 2 or 3, and R² is a hydrogen atom, a monovalent saturated or unsaturated aliphatic or cycloaliphatic hydrocarbon group or a group HO(CH₂)_{q}-, wherein q=0, 1, 2 or 3, wherein the aliphatic or cycloaliphatic hydrocarbon group optionally comprises one or more substituents independently selected from halogen atoms, NH₂ and SH,
(d) the group of polyhydric alcohols consisting of threitol, erythritol, arabitol, adonitol, xylitol, pentaerythritol, sorbitol, mannitol and dulcitol, wherein the alcohols optionally comprise one or more substituents selected from SH, a halogen atom and NH₂, and
(e) polyhydric alcohols with aromatic rings of the formula R⁵-(R⁶-OH)ₖ, wherein R⁵ is an aromatic hydrocarbon group which, in addition to k substituents of the formula -R⁶-OH, optionally comprises one or more additional substituents independently selected from halogen atoms, C₁-C₁₂ alkyl groups, NH₂ and SH, and wherein R⁶ can be the same or different and represents a divalent saturated or unsaturated aliphatic hydrocarbon group with 1 to 12 carbon atoms and k is an integer from 1 to 4.

8. Composition according to any of claims 3 to 7, wherein the polyhydric alcohol is saturated.

9. Composition according to any of claims 1 to 8, wherein the alcohol component consists of a mixture of mono- and/or polyhydric alcohols, one or several of which can optionally be present in esterified form.

10. Composition according to any of claims 1 to 9, wherein the carboxylic acid component consists of a mixture of mono- and/or polybasic carboxylic acids, one or several of which can optionally be present in esterified form.

11. Composition according to claim 6, wherein the unsaturated ester product is obtained by reacting a drying, semidrying or non-drying oil and a polyhydric alcohol and optionally one or more carboxylic acids or carboxylic acid derivatives different from triglycerides.

12. Composition according to claim 11, wherein the polyhydric alcohol is not glycerin.

13. Composition according to claims 6, 11 and 12, wherein the carboxylic acid component comprises linseed oil, soy oil, sunflower oil, safflower oil, rapeseed oil, cottonseed oil, tall oil, fish oil, colza oil, tung oil, dehydrated castor oil, perilla oil, poppyseed oil, nut oil, hempseed oil, whale oil, beechnut oil, corn oil, sesame oil, peanut oil, castor oil, coconut oil, olive oil, palm oil, palm kernel oil, beef tallow, mutton tallow, lard, butter fat or a mixture thereof.

14. Composition according to any of claims 1 to 13, wherein the carboxylic acid component comprises at least one carboxylic acid or a derivative thereof selected from:
(a) monocarboxylic acids of the general formula
R³-COOH
wherein R³ is an aryl group optionally substituted with one or more straight-chain and branched alkyl groups or a straight-chain or branched aliphatic or cycloaliphatic saturated or unsaturated hydrocarbon group with optionally one or more substituents selected from halogen atoms, NH₂, SH and OH,
(b) dicarboxylic acids of the general formula
HOOC-R⁴-COOH
wherein R⁴ is a divalent group selected from a branched or straight-chain aliphatic or cycloaliphatic saturated or unsaturated group with 0 to 30 carbon atoms and an aromatic hydrocarbon group optionally substituted with one or more C₁-C₆ alkyl groups,
(c) polycarboxylic acids selected from trimellitic acid, tricarballylic acid, trimesic acid, hemimellitic acid, pyromellitic acid and mellitic acid, and
(d) the group of carboxylic acids consisting of ricinenic acid, sorbic acid, acrylic acid, methacrylic acid and crotonic acid,
wherein one or more of the carboxy groups are optionally not present in a free form, but as an acid amide, acid halide, anhydride or ester and
wherein the at least one carboxylic acid optionally comprises one or more functional groups selected from hydroxyl groups, thiol groups and amino groups.

15. Composition according to claim 6, wherein the long-chain unsaturated acid is selected from palmitoleic acid, oleic acid, erucic acid, ricinoleic acid, linoleic acid, linolenic acid, elaeostearic acid, arachidonic acid, clupanodonic acid, docosahexaenoic acid and mixtures thereof.

16. Composition according to any of claims 1 to 15, wherein the optionally substituted cyclopentadiene is used in the form of the dicyclopentadiene optionally substituted correspondingly and obtained therefrom *in situ*.

17. Coating composition comprising:
(a) a composition according to any of claims 1 to 16
(b) at least one solvent
and
(c) optionally an additional component selected from dyes, pigments, fillers, additives and mixtures thereof.

18. Coating composition according to claim 17, wherein the amount of the composition (a) accounts for 10 to 90 wt.-% based on the coating composition.

19. Use of a composition according to any of claims 1 to 16 as a binder for lacquers.

20. Use according to claim 19, wherein the lacquer is a packing lacquer.

21. Use of a coating composition according to claim 17 or 18 for coating articles.

22. Use according to claim 21, wherein the article is a metal article.

23. Article comprising a coating, said coating having been obtained by applying a coating composition according to claim 17 or 18, drying, and optionally baking.

24. Article according to claim 23, wherein the article is a container.

25. Article according to claim 24, wherein the container is a can, a barrel or a tank.

26. Article according to any of claims 23 to 25, wherein the article is a metal article.

27. Article according to any of claims 24 to 26, wherein the coating is present at least on the inside of the container.

28. Process for coating metal, plastic materials, glass, cardboard or wood, comprising applying a coating composition according to claim 17 or 18, drying, and optionally baking.

29. Process according to claim 28, wherein the metal is tinplate, black plate, TFS (= tin free steel) or sheet aluminum.

30. Process according to claim 29, wherein the coating composition is only applied to one side of the plate.

31. Process for manufacturing containers comprising
(a) coating a plate on at least one side according to the process of claim 29,
(b) forming containers from the coated plate obtained in step (a).

32. Process for manufacturing containers comprising
(a) forming the container from metal, a plastic material, glass, cardboard or wood
(b) coating the inside and/or the outside of the container obtained in step (a) according to the process of claim 28.

33. Process for preparing a coating composition according to claim 17 or 18 comprising
(a) providing at least one component selected from phenolic resins, amino resins, polyfunctional isocyanates and derivatives thereof, said component comprising functional groups (A),
(b) preparing an unsaturated ester product as described in any of claims 1 to 15,
(c) reacting the unsaturated ester product obtained in step (b) with an optionally substituted cyclopentadiene at room temperature or an elevated temperature resulting in a cyclopentadiene adduct comprising functional groups (B) which can enter into a chemical bond with the functional groups (A) of component (a),
(d) mixing the cyclopentadiene adduct obtained in step (c) with at least one reactant according to (a),
and optionally
(e) mixing the mixture obtained in step (d) with at least one solvent and optionally one or more additional components selected from dyes, pigments, fillers and additives, whereby one or more components and/or solvents can also already be added to the component provided in step (a) and/or to the cyclopentadiene adduct obtained in step (c) before the component provided in step (a) and the cyclopentadiene adduct obtained in step (c) are brought into contact.

34. Process according to claim 33, wherein the optionally substituted cyclopentadiene is used in the form of the dicyclopentadiene optionally substituted correspondingly and obtained therefrom *in situ*.

35. Kit comprising
(i) a first container comprising at least one component (a) selected from phenolic resins, amino resins, polyfunctional isocyanates and derivatives thereof, wherein the component (a) comprises functional groups (A), and
(ii) a second container comprising at least one cyclopentadiene adduct obtainable from a reaction as described in any of claims 1 to 16 and which comprises functional groups (B) which can enter into a chemical bond with the functional groups (A) of the component of the first container.

36. Kit according to claim 35, further comprising at least one solvent and optionally one or more components selected from dyes, pigments, fillers and additives, wherein the solvent and/or the additional components are present in the first and/or second container and/or in one or more additional containers.

## Revendications

1. Composition comprenant
(a) au moins un constituant choisi parmi des résines phénoliques, des résines amino, des isocyanates polyfonctionnels et leurs dérivés, et
(b) comme autre constituant, au moins un produit d'addition de cyclopentadiène pouvant être obtenu par réaction d'au moins un produit ester insaturé avec un cyclopentadiène éventuellement substitué,
le produit ester insaturé pouvant être obtenu par réaction d'un constituant alcool comprenant un mono- ou polyalcool avec un constituant acide carboxylique comprenant un acide mono- ou polycarboxylique ou un de ses dérivés,
à condition que le mono- ou polyalcool et/ou l'acide mono- ou polycarboxylique présentent au moins une double liaison non aromatique, et
à condition que soit le mono- ou polyalcool, soit l'acide mono- ou polycarboxylique, soit les deux, soient polyvalents,
le constituant (b) comprenant des groupes fonctionnels (B) qui peuvent former une liaison chimique avec les groupes fonctionnels (A) du constituant (a).

2. Composition selon la revendication 1, dans laquelle le mono- ou polyalcool n'a pas de double liaison non aromatique et l'acide mono- ou polycarboxylique ou son dérivé a au moins une double liaison non aromatique.

3. Composition selon la revendication 1 ou 2, dans laquelle le constituant alcool comprend un polyalcool.

4. Composition selon la revendication 3, dans laquelle le constituant acide carboxylique comprend un acide monocarboxylique ou un de ses dérivés et le constituant alcool comprend un polyalcool.

5. Composition selon la revendication 3 ou 4, dans laquelle le polyalcool contient 2 à 6 groupes hydroxyle par molécule.

6. Composition selon l'une des revendications 1 à 3, dans laquelle le produit ester insaturé peut être obtenu par réaction d'un constituant alcool comprenant un alcool polyvalent avec un constituant acide carboxylique comprenant au moins 3 % en masse d'acides insaturés à longue chaîne contenant 8 à 30 atomes de carbone et 1 à 6 doubles liaisons non aromatiques ou ses dérivés.

7. Composition selon l'une des revendications 1-6, dans laquelle le mono- ou polyalcool est choisi parmi:
(a) des monoalcools de formule générale R⁰-OH, où R⁰ est un reste hydrocarboné aliphatique ou cycloaliphatique monovalent, saturé ou insaturé, le reste hydrocarboné aliphatique ou cycloaliphatique contenant éventuellement un ou plusieurs atomes d'oxygène d'éther et ayant éventuellement un ou plusieurs substituants choisis indépendamment parmi un atome d'halogène, NH₂ et SH,
(b) des dialcools de formule générale HO-R¹-OH, où R¹ est un reste hydrocarboné divalent aliphatique ou cycloaliphatique, saturé ou insaturé, qui contient éventuellement un ou plusieurs atomes d'oxygène d'éther et a éventuellement un ou plusieurs substituants choisis indépendamment parmi des atomes d'halogène, SH et NH₂,
(c) des polyalcools de formule générale
HO(CH₂)ₙ-CH₂-CR²OH(CH₂)ₘ-CH₂-(CH₂)ₚOH
dans laquelle n, m et p sont indépendamment 0, 1, 2 ou 3, et R² est un atome d'hydrogène, un reste hydrocarboné monovalent aliphatique ou cycloaliphatique, saturé ou insaturé, ou un reste HO(CH₂)_{q}-, où q = 0, 1, 2 ou 3, le reste hydrocarboné aliphatique ou cycloaliphatique ayant éventuellement un ou plusieurs substituants choisis indépendamment parmi des atomes d'halogène, NH₂ et SH,
(d) le groupe des polyalcools constitué du thréitol, de l'érythritol, de l'arabitol, de l'adonitol, du xylitol, du pentaérythritol, du sorbitol, du mannitol et du dulcitol, les alcools ayant éventuellement un ou plusieurs substituants choisis parmi SH, un atome d'halogène et NH₂, et
(e) des polyalcools ayant des cycles aromatiques de formule R⁵-(R⁶-OH)ₖ, dans laquelle R⁵ est un reste hydrocarboné aromatique qui, en plus des k substituants de formule -R⁶-OH, a éventuellement un ou plusieurs autres substituants choisis indépendamment parmi des atomes d'halogène, des restes alkyle en C₁-C₁₂, NH₂ et SH, et les R⁶ peuvent être identiques ou différents et représentent un reste hydrocarboné aliphatique divalent, saturé ou insaturé, de 1 à 12 atomes de carbone, et k est un nombre entier de 1 à 4.

8. Composition selon l'une des revendications 3 à 7, dans laquelle le polyalcool est saturé.

9. Composition selon l'une des revendications 1 à 8, dans laquelle le constituant alcool est composé d'un mélange de mono- et/ou polyalcools dont un ou plusieurs peuvent éventuellement se trouver sous forme estérifiée.

10. Composition selon l'une des revendications 1 à 9, dans laquelle le constituant acide carboxylique est composé d'un mélange d'acides mono- et/ou polycarboxyliques dont un ou plusieurs peuvent éventuellement se trouver sous forme estérifiée.

11. Composition selon la revendication 6, dans laquelle le produit ester insaturé peut être obtenu par réaction d'une huile siccative, semi-siccative ou non siccative avec un polyalcool et éventuellement un ou plusieurs acides carboxyliques ou dérivés d'acides carboxyliques différents de triglycérides.

12. Composition selon la revendication 11, dans laquelle le polyalcool est différent du glycérol.

13. Composition selon la revendication 6, 11 et 12, dans laquelle le constituant acide carboxylique comprend l'huile de lin, l'huile de soja, l'huile de tournesol, l'huile de carthame, l'huile de colza, l'huile de graines de coton, le tallol, l'huile de poisson, l'huile de navette, l'huile de bois, l'huile de ricin déshydratée, l'huile de périlla, l'huile de pavot, l'huile de noix, l'huile de chanvre, l'huile de baleine, l'huile de faînes, l'huile de maïs, l'huile de sésame, l'huile d'arachides, l'huile de ricin, l'huile de coco, l'huile d'olives, l'huile de palme, l'huile de palmiste, le suif de boeuf, le suif de mouton, le saindoux, la graisse butyrique ou un de leurs mélanges.

14. Composition selon l'une des revendications 1 à 13, dans laquelle le constituant acide carboxylique comprend au moins un acide carboxylique ou un de ses dérivés, qui est choisi parmi:
(a) des acides monocarboxyliques de formule générale
R³-COOH
dans laquelle R³ est un reste aryle éventuellement substitué par un ou plusieurs groupes alkyle linéaires ou ramifiés ou un reste hydrocarboné aliphatique linéaire ou ramifié ou cycloaliphatique, saturé ou insaturé, ayant éventuellement un ou plusieurs substituants choisis parmi des atomes d'halogènes, NH₂, SH et OH,
(b) des acides dicarboxyliques de formule générale
HOOC-R⁴-COOH
dans laquelle R⁴ est un reste divalent choisi parmi un reste aliphatique linéaire ou ramifié ou cycloaliphatique, saturé ou insaturé, de 0 à 30 atomes de carbone, et un reste hydrocarboné aromatique éventuellement substitué par un ou plusieurs groupes alkyle en C₁-C₆,
(c) des acides polycarboxyliques choisis parmi l'acide trimellitique, l'acide tricarballylique, l'acide trimésique, l'acide hémimellitique, l'acide pyromellitique et l'acide mellitique, et
(d) le groupe des acides carboxyliques constitué de l'acide ricinénique, l'acide sorbique, l'acide acrylique, l'acide méthacrylique et l'acide crotonique,
où un ou plusieurs des groupes carboxyle ne se trouve éventuellement pas sous forme libre, mais sous forme d'amide, d'halogénure d'acide, d'anhydride ou d'ester et où cet au moins un acide carboxylique contient éventuellement un ou plusieurs groupes fonctionnels choisis parmi des groupes hydroxy, des groupes thiol et des groupes amino.

15. Composition selon la revendication 6, dans laquelle l'acide insaturé à longue chaîne est choisi parmi l'acide palmitoléique, l'acide oléique, l'acide érucique, l'acide ricinoléique, l'acide linoléique, l'acide linolénique, l'acide éléostéarique, l'acide arachidonique, l'acide clupanodonique, l'acide docosahexaénoïque et leurs mélanges.

16. Composition selon l'une des revendications 1 à 15, dans laquelle le cyclopentadiène éventuellement substitué est introduit sous forme de dicyclopentadiène éventuellement substitué de façon correspondante et est produit *in situ* à partir de celui-ci.

17. Composition de revêtement comprenant:
(a) une composition selon l'une des revendications 1 à 16,
(b) au moins un solvant, et
(c) éventuellement un autre ingrédient choisi parmi des colorants, des pigments, des charges, des additifs et leurs mélanges.

18. Composition de revêtement selon la revendication 17, dans laquelle la quantité de composition (a) s'élève à 10 à 90 % en masse par rapport à la composition de revêtement.

19. Utilisation d'une composition selon l'une des revendications 1 à 16 comme liant pour des vernis.

20. Utilisation selon la revendication 19, dans laquelle le vernis est un vernis pour emballages.

21. Utilisation d'une composition de revêtement selon la revendication 17 ou 18 pour le revêtement d'objets.

22. Utilisation selon la revendication 21, dans laquelle l'objet est en métal.

23. Objet comprenant un revêtement, le revêtement étant préparé par application d'une composition de revêtement selon la revendication 17 ou 18, séchage et éventuellement cuisson au four.

24. Objet selon la revendication 23, l'objet étant un récipient.

25. Objet selon la revendication 24, le récipient étant une boîte, un fût ou un réservoir.

26. Objet selon l'une des revendications 23 à 25, l'objet étant en métal.

27. Objet selon l'une des revendications 24 à 26, dans lequel le revêtement est présent au moins sur la face interne du récipient.

28. Procédé de revêtement de métaux, de matières plastiques, de verre, de carton ou de bois, comprenant l'application d'une composition de revêtement selon la revendication 17 ou 18, un séchage et éventuellement une cuisson au four.

29. Procédé selon la revendication 28, dans lequel le métal est du fer-blanc, de la tôle noire, de l'acier TFS (= *tin free steel,* acier sans étain) ou de la tôle d'aluminium.

30. Procédé selon la revendication 29, dans lequel la composition de revêtement n'est appliquée que sur un côté de la tôle.

31. Procédé de fabrication de récipients, comprenant:
(a) le revêtement de tôle sur au moins un côté selon le procédé de la revendication 29,
(b) le façonnage de récipients à partir de la tôle revêtue obtenue dans l'étape (a).

32. Procédé de fabrication de récipients, comprenant:
(a) le façonnage du récipient à partir d'un métal, d'une matière plastique, de verre, de carton ou de bois,
(b) le revêtement du récipient obtenu dans l'étape (a) sur la face interne et/ou externe selon le procédé de la revendication 28.

33. Procédé de préparation d'une composition de revêtement selon la revendication 17 ou 18, comprenant:
(a) la préparation d'au moins un constituant choisi parmi des résines phénoliques, des résines amino, des isocyanates polyfonctionnels et leurs dérivés, ce constituant contenant des groupes fonctionnels (A),
(b) la préparation d'un produit ester insaturé de la manière décrite dans l'une des revendications 1 à 15,
(c) la réaction du produit ester insaturé obtenu dans l'étape (b) avec un cyclopentadiène éventuellement substitué à la température ambiante ou à température élevée, grâce à quoi on obtient un produit d'addition de cyclopentadiène qui contient des groupes fonctionnels (B) pouvant former une liaison chimique avec les groupes fonctionnels (A) du constituant (a),
(d) le mélange du produit d'addition de cyclopentadiène obtenu dans l'étape (c) avec au moins un partenaire de réaction selon (a), et éventuellement
(e) le mélange du mélange obtenu dans l'étape (d) avec au moins un solvant et éventuellement un ou plusieurs autres ingrédients choisis parmi des colorants, des pigments, des charges et des additifs, un ou plusieurs ingrédients et/ou solvants pouvant aussi être mélangés déjà au constituant préparé dans l'étape (a) et/ou au produit d'addition de cyclopentadiène obtenu dans l'étape (c) avant la mise en contact du constituant préparé dans l'étape (a) avec le produit d'addition de cyclopentadiène obtenu dans l'étape (c).

34. Procédé selon la revendication 33, dans lequel le cyclopentadiène éventuellement substitué est introduit sous forme de dicyclopentadiène éventuellement substitué de façon correspondante et produit *in situ* à partir de celui-ci.

35. Trousse, comprenant
(i) un premier récipient, contenant au moins un constituant (a) choisi parmi des résines phénoliques, des résines amino, des isocyanates polyfonctionnels et leurs dérivés, le constituant (a) contenant des groupes fonctionnels (A), ét
(ii) un deuxième récipient, contenant au moins un produit d'addition de cyclopentadiène pouvant être obtenu par une réaction telle que décrite dans l'une des revendications 1 à 16, et contenant des groupes fonctionnels (B) qui peuvent former une liaison chimique avec les groupes fonctionnels (A) du constituant du premier récipient.

36. Trousse selon la revendication 35, comprenant en outre au moins un solvant et éventuellement un ou plusieurs ingrédients choisis parmi des colorants, des pigments, des charges et des additifs, le solvant et/ou les autres ingrédients se trouvant dans le premier et/ou le deuxième récipient et/ou un ou plusieurs autres récipients.
